Europäisches Patentamt

European Patent Office

Office européen des brevets

(19)

(11) Veröffentlichungsnummer : **0 327 872 B1**

(12) # EUROPÄISCHE PATENTSCHRIFT

(45) Veröffentlichungstag der Patentschrift :
**22.07.92 Patentblatt 92/30**

(51) Int. Cl.$^5$ : **H04M 3/24,** H04M 3/30, G06F 11/22

(21) Anmeldenummer : **89101129.8**

(22) Anmeldetag : **23.01.89**

(54) **Verfahren zur Prüfung und Fehleranalyse von elektrischen Schaltungsmoduln.**

(30) Priorität : **10.02.88 DE 3804066**

(43) Veröffentlichungstag der Anmeldung :
**16.08.89 Patentblatt 89/33**

(45) Bekanntmachung des Hinweises auf die
Patenterteilung :
**22.07.92 Patentblatt 92/30**

(84) Benannte Vertragsstaaten :
**AT BE CH DE FR GB IT LI NL SE**

(56) Entgegenhaltungen :
**DE-A- 2 816 408**
**DE-A- 3 401 292**
**US-A- 4 547 633**
**ELEKTRONIK, Band 36, Nr. 5, 6 März 1987,**
**Seiten 130-132, München, DE; R. KRAMER et**
**al.: "Der "Mixed-Signal"-Test führt zumZiel"**

(73) Patentinhaber : **SIEMENS**
**AKTIENGESELLSCHAFT**
**Wittelsbacherplatz 2**
**W-8000 München 2 (DE)**

(72) Erfinder : **Eder, Christoph**
**Schongauerstrasse 26**
**W-8000 München 70 (DE)**

## Beschreibung

Die Erfindung betrifft ein Verfahren zur Prüfung und Fehleranalyse von elektronischen Schaltungsmoduln, die Bestandteil einer übergeordneten Baugruppe sind, insbesondere der teilnehmerindividuellen Bestandteile von Teilnehmeranschlußbaugruppen eines digitalen Zeitmultiplex-Fernmeldesystems, auf Einhaltung geforderter übertragungstechnischer Eigenschaften.

Die Prüfung solcher Schaltungsmoduln erfolgte bisher in der Weise, daß zunächst eine visuelle Prüfung auf Kurzschlüsse, Unterbrechungen und fehlende Bauelemente vorgenommen wurde. Daran schloß sich eine elektrische Prüfung der einzelnen Bauelemente an, wozu mit Meßnadeln die einzelnen Bauelemente separat kontaktiert und der Reihe nach einer Strom-/Spannungsmessung unterworfen wurden. Etwaige Logikbausteine wurden in entsprechender Weise einem Logiktest unterzogen. Hierbei gegebenenfalls entdeckte Fehler wurden repariert, wozu unter Umständen die Moduln wieder aus der übergeordneten Baugruppe ausgelötet werden mußten. Erst danach erfolgte eine übertragungstechnische Prüfung auf die Einhaltung geforderter übertragungstechnischer Eigenschaften, die allerdings lediglich zu einer pauschalen Gut-Schlechtaussage führte. Bei Feststellung eines Fehlers schloß sich ein Analyseprogramm zur Ermittlung der eigenschaftlichen Fehlerursache an, das, da wiederum die gesamte übergeordnete Baugruppe einbezogen wurde, entsprechend umfangreich war.

Im Falle von Bauelementen, die in SMD-Technik (<u>S</u>urface <u>M</u>ounted <u>D</u>evice) ausgeführt sind, werden durch die Kontaktierung mit den Meßnadeln die Bauelemente auf die zugehörigen Anschlußleiterbahnen gedrückt, so daß ein vorher gegebenenfalls vorhandener nicht ausreichend guter Anschlußkontakt bei der elektrischen Prüfung nicht erkannt wird.

Die Aufgabe der vorliegenden Erfindung besteht nun darin, ein verfahren zur Prüfung und Fehleranalyse von elektronischen Schaltungsmoduln anzugeben, das weniger aufwendig und insbesondere weniger zeitaufwendig ist und bei dem dennoch weitgehend vermieden ist, daß Fehler unerkannt bleiben.

Erfindungsgemäß wird diese Aufgabe dadurch gelöst, daß an den Schaltungsmoduln vor ihrer baulichen Vereinigung zu einer größeren Baugruppe je zu überprüfender übertragungstechnischer Eigenschaft eine Meßreihe unter ausschließlicher Verwendung externer, bei der Vereinigung mit der übergeordneten Baugruppe ausgenutzter Anschlüsse durchgeführt wird, daß die dabei erhaltenen Meßwerte im Hinblick auf ein Überschreiten, ein Unterschreiten oder ein Einhalten eines zugelassenen Toleranzbereichs digitalisiert werden, und daß zur Fehleranalyse das solcherart aufbereitete Meßergebnis mit in einem Speicher abgelegten definierten Fehlern entsprechenden in derselben Weise digitalisierten Meßwertfolgen verglichen werden.

Beim erfindungsgemäßen Verfahren wird also auf die im bekannten Fall angewendete visuelle und bauteilindividuelle elektrische Prüfung verzichtet, so daß einerseits zwei Prüfschritte entfallen, andererseits es nicht wie im bekannten Falle dazu kommen kann, daß Kontaktfehler zumindest zunächst unentdeckt bleiben. Es werden vielmehr lediglich übertragungstechnische Prüfungen an den Schaltungsmoduln durchgeführt und zwar vor deren Vereinigung mit der übergeordneten Baugruppe mit der Folge, daß die Fehleranalyse schon von daher weniger komplex ist als im bekannten Fall, im übrigen aber aufgrund der besonderen erfindungsgemäßen Art der Durchführung sich besonders günstig gestaltet.

Bei einer ersten Ausführungsform der Erfindung erfolgt die im Zusammenhang mit der Fehleranalyse vorgenommene digitalisierte Darstellung der aktuell gemessenen und der im Speicher abgelegten Meßwerte jeweils so, daß die Meßwerte durch einen ersten, zweiten oder dritten vorgegebenen Zahlenwert ersetzt werden, je nachdem, ob sie die Obergrenze eines Toleranzbereichs überschreiten, innerhalb des Toleranzbereichs liegen oder die Untergrenze des Toleranzbereichs unterschreiten, und daß beim Vergleich der aktuellen Meßwertfolge mit den gespeicherten Meßwertfolgen auf Übereinstimmung geprüft wird. Zweckmäßigerweise unterscheiden sich der erste Zahlenwert und der dritte Zahlenwert lediglich durch das Vorzeichen. Diese Analysevariante läßt sich zwar relativ schnell abwickeln, führt jedoch nicht in jedem Fall zur Ermittlung des defekten Teils des Schaltungsmoduls, weswegen sie in erster Linie für eine Grobanalyse geeignet ist.

Bei einer anderen Ausführungsform der Erfindung erfolgt die im Zusammenhang mit der Fehleranalyse vorgenommene digitalisierte Darstellung derart, daß die Meßwerte durch einen vorgegebenen Zahlenwert oder durch den Zahlenwert 0 ersetzt werden, je nachdem, ob sie außerhalb oder innerhalb eines Toleranzbereichs liegen. Zum Vergleich werden die gespeicherten, jeweils einem bestimmten Fehler entsprechenden Meßwertfolgen als Matrix aus mehreren Fehlerquellvektoren und die Meßwerte der aktuellen Meßwertfolge als Fehlervektor behandelt und eine Multiplikation der Fehlerquellvektorenmatrix und des Fehlervektors vorgenommen und schließlich der dabei erhaltene Ergebnisvektor auf Übereinstimmung mit der Summe der Werte des Fehlervektors und der Summe der Werte jedes der Fehlerquellvektoren überprüft. Diese Variante ist zwar zeitaufwendiger, führt jedoch mit größerer Sicherheit zu einem Ergebnis, ist also für eine Feinanalyse geeignet.

Gemäß einer weiteren Ausgestaltung der Erfindung wird die genannte Grobanalyse dann angewandt, wenn die Toleranzgrenzenüberschreitung bzw. die Toleranzgrenzenunterschreitung der aktuellen Meßwerte ein vorgegebenes Ausmaß übersteigen, die Feinanalyse dagegen dann, wenn entweder die Grobanalyse nicht zum Auffinden einer Fehlerursache geführt hat oder wenn die Toleranzgrenzenüberschreitung bzw. die Toleranzgrenzenunterschreitung der aktuellen Meßwerte ein vorgegebenes Ausmaß nicht übersteigt.

Nachstehend wird das erfindungsgemäße Verfahren anhand von Ausführungsbeispielen unter Bezugnahme auf eine Zeichnung, die zwei Ablaufdiagramme zeigt, näher erläutert.

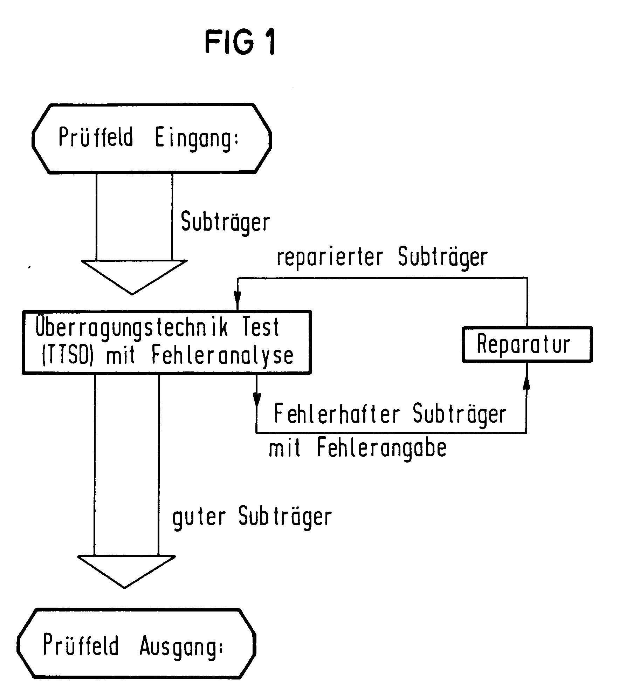

Wie die Figur 1 zeigt, werden in Durchführung des erfindungsgemäßen Verfahrens die elektronischen Schaltungsmoduln als solche, also bevor sie in eine übergeordnete Baugruppe eingegliedert worden sind, einer Prüfung unterworfen und zwar direkt einer Prüfung auf übertragungstechnische Eigenschaften. Es wird dabei auch eine Fehleranalyse durchgeführt. Sofern dabei ein Schaltungsmodul als fehlerhaft erkannt wird und auch die Art des Fehlers gefunden worden ist, wird, sofern dies möglich ist, eine entsprechende Reparatur durchgeführt und die obengenannte Prüfung wiederholt. Gegebenenfalls schließen sich weitere solcher übertragungstechnischer Prüfungen an, bei denen auf die Einhaltung anderer übertragungstechnischer Eigenschaften geprüft wird. Erst wenn sämtliche zu einer übergeordneten Baugruppe gehörenden elektronischen Schaltungsmoduln auf diese Art und Weise für gut befunden worden sind, werden sie in die übergeordnete Baugruppe eingelötet. Die übergeordneten Baugruppen brauchen danach nur noch stichprobenartig überprüft werden.

Im Zuge einer der erwähnten übertragungstechnischen Prüfungen wird eine Meßreihe durchgeführt und ermittelt, ob bestimmte Toleranzbereiche der betreffenden übertragungstechnischen Eigenschaften eingehalten werden. So wird beispielsweise für verschiedene Frequenzen die Nachbildfehlerdämpfung gemessen, wozu nicht direkt auf irgendwelche Bauteile oder Baueinheiten der Schaltungsmoduln zugegriffen wird, wie dies beim geschilderten bekannten Verfahren der Fall war, sondern lediglich solche Anschlüsse ausgenützt werden, über die die Schaltungsmoduln im Endmontagezustand mit Teilen der übergeordneten Baugruppe elektrisch verbunden sind.

Gemäß einem weiteren Merkmal der Erfindung werden die Meßwerte einer solchen Meßreihe vor der Durchführung der Fehleranalyse digitalisiert.

Im Falle einer Grobanalyse geschieht dies in der Weise, daß Meßwerten, die eine Toleranzgrenze überschreiten, der Wert "1" zugeordnet wird, Meßwerten, die innerhalb des Toleranzbereiches liegen, der Wert "0" und Meßwerten, die die Toleranzgrenze des Toleranzbereichs unterschreiten, der Wert "-1".

Bei der untenstehend beispielsweise dargestellten, vier Meßwerte umfassenden Meßreihe

```
                    *                        *  Meßwerte

    _____
                                             Toleranzobergrenze
            *           *
                                             Toleranzuntergrenze
    _____
                    *
        ,
```

ergibt sich somit ein Fehlervektor F (0, 1, 0, -1). Ein weiterer Schritt des erfindungsgemäßen Verfahrens ist ein Vergleich des genannten Fehlervektors mit gespeicherten Fehlerquellvektoren. Diese Fehlerquellvektoren werden dadurch erhalten, daß bei einem entsprechenden Schaltungsmodul gezielt typische Fehler herbeigeführt werden, also bestimmte Kurzschlüsse oder Unterbrechungen an bestimmten Stellen der schaltungsanordnung erzeugt werden oder Bauelemente falscher elektrischer Werte eingebaut werden und in diesem Zustand die entsprechende übertragungstechnische Messung durchgeführt wird. Solche Fehlerquellvektoren FQ1 bis FQn bilden dann sozusagen eine Fehlerquellmatrix, die beispielsweise folgendes Aussehen hat:

FQ1 (0, 1, -1, 0)
FQ2 (0, 1, 0, -1)

.

.

.

FQn (-1, 1, -1, .)

Für die Fehleranalyse wird nun dem Fehlervektor F nacheinander von den Fehlerquellvektoren FQ1 bis FQn der Fehlerquellmatrix subtrahiert. Sofern sich dabei ein "0-Vektor" ergibt, bedeutet dies, daß ein Fehler gefunden ist, der zu dem betreffenden Fehlerquell-Vektor gehört. Unter Zugrundelegung der obenstehend aufgeführten Beispiele ergibt sich also:

FQ1 - F = (0, 0 ,-1, 1)
FQA2 - F = (0, 0, 0, 0) - - - Treffer

.
.
FQn - F = (-1, 1, -1, 1)

Zur Durchführung einer Feinanalyse wird die Digitalisierung der Meßwerte in der Weise vorgenommen, daß das Überschreiten einer Toleranzgrenze unabhängig von der Richtung mit einem bestimmten Zahlenwert bewertet wird und daß Meßwerte, die innerhalb der Toleranzgrenzen liegen, den Wert 0 zugeordnet bekommen.

Bei der nachstehend dargestellten Meßwertkonstellation

```
            *                              *  Meßwert

     _____      Toleranzobergrenze


          *           *

     _____      Toleranzuntergrenze


                  *
```

ergibt sich demnach ein Fehlervektor F (0,1,0,1). Es wird ferner die Summe des Fehlervektors, d.h. der den einzelnen Meßwerten zugeordneten Zahlenwerte gebildet, es gilt im vorliegenden Fall Summe F = 2.

Auch für die Fehlerquellvektoren der Fehlerquellmatrix, bei der dieselbe Art von Digitalisierung zugrunde gelegt worden ist, werden die Summenwerte gebildet. Für eine Fehlerquellmatrix

FQ1 (0, 1, 1, 1)
FQ2 (1, 0, 0, 0)
FQ3 (0, 1, 0, 1)
.
.
.
FQn (0, 0 , 0, 1)

bestehen also die Summenwerte Summe FQ 1 = 3; Summe FQ2 = 1 Summe FQ3 = 2... SFQn = 1.

Zum Vergleich des Fehlervektors mit den Fehlerquellvektoren der Fehlerquellmatrix wird zunächst das Matrixprodukt gebildet, was beim nachstehend dargestellten Beispiel

$$
\begin{array}{ccc}
FQ & F & E \\
\begin{vmatrix}
0 & 1 & 1 & 1 \\
1 & 0 & 0 & 0 \\
0 & 1 & 0 & 1 \\
\cdot & & & \\
\cdot & & & \\
0 & 0 & 0 & 1
\end{vmatrix}
\times
\begin{vmatrix}
0 \\
1 \\
0 \\
1
\end{vmatrix}
=
\begin{vmatrix}
2 \\
0 \\
2 \\
\cdot \\
\cdot \\
1
\end{vmatrix}
\end{array}
$$

Zu einem Ergebnisvektor E (2 0 2..1) führt. Da, wie dargelegt, Meßwerte, die innerhalb des Toleranzbereichs liegen, mit dem Zahlenwert 0 belegt werden, stellen die einzelnen Elemente des Ergebnisvektors E (FQn) den Grad von Übereinstimmungen bzw. dann wenn als der genannte feste Zahlenwert der Wert 1 verwendet wird, die Anzahl der Übereinstimmungen zwischen dem Fehlervektor und jeweils einem der Fehlerquellvektoren bei Meßwerten dar, die nicht innerhalb des Toleranzbereichs liegen. Die Werte der einzelnen Elemente des Ergebnisvektors lassen also schon eine Aussage über die Wahrscheinlichkeit der in Frage kommenden Fehlerquellen zu. Eine exakte Aussage wird dadurch erhalten, daß auf Gleichheit der Summe der Fehlerquellvektoren, der Summe des Fehlervektors und der Elemente des Ergebnisvektors, also auf Vorliegen der Bedingung Summe FQn = - Summe F = E (FQn) geprüft wird. Unter Zugrundelegung des oben dargestellten Beispiels ergibt sich also:

Summe FQ1 = 3; Summe F = 2; E (FQ1) = 2; d.h. 3 = 2 = 2 falsch

Summe FQ2 = 1; Summe F = 2; E (FQ2) = 0; d.h. 1 = 2 = 0 falsch

Summe FQ3 = 2; Summe F = 2; E (FQ3) = 2; d.h. 2 = 2 = 2 richtung

.

.

.

Summe FQn = 1; Summe F = 2; E (FQn) = 1; d.h. 1 = 2 = 1 falsch

Das bedeutet, daß ein durch den Fehlerquellvektor FQ3 charakterisierter Fehler vorliegt.

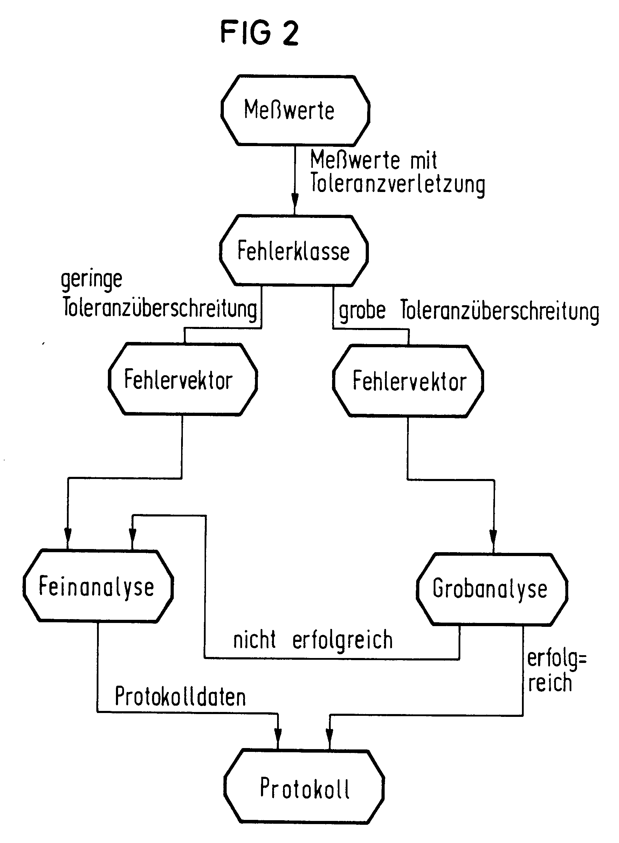

Wie angedeutet, werden gemäß einer weiteren Ausgestaltung der Erfindung die erläuterte Grobanalyse und Feinanalyse miteinander kombiniert, was nachstehend anhand des Ablaufdiagramms gemäß Figur 2 näher erläutert wird.

Von den Meßwerten einer übertragungstechnischen Messungen werden die einer Toleranzverletzung darstellenden Meßwerte einer Fehlerklassenprüfung unterworfen, d.h. es wird festgestellt, ob der Meßwert mehr als einen vorgegebenen Betrag oberhalb oder unterhalb der Toleranzgrenze liegt, in welchem Falle eine grobe Toleranzverletzung angenommen wird, oder ob die Meßwerte zwar außerhalb eines Toleranzbereiches liegen aber die vorgenannte Überschreitungsgrenze nicht erreichen, in welchem Falle eine geringe Toleranzüberschreitung angenommen wird.

Liegt eine grobe Toleranzüberschreitung vor, dann wird in der obenstehend erläuterten Art und Weise eine Grobanalyse vorgenommen, die entweder zum Auffinden eines Fehlerorts führt, in welchem Falle die Analyse abgeschlossen ist oder aber zu keinem Ergebnis führt, in welchem Falle die vorstehend erläuterte Feinanalyse durchgeführt wird, deren Ergebnis dann das Auffinden eines Fehlerortes ist. Die Feinanalyse wird direkt durchgeführt, wenn die festgestellten Abweichungen das erläuterte geringe Ausmaß aufweisen.

Bei der Kriterienbildung für die Notwendigkeit einer Feinanalyse wird von einer typischen Meßkurve ausgegangen, die durch Mittelwertbildung aus beispielsweise 5 Meßreihen gebildet wird und die bei jedem Meßdurchlauf, bei dem keine Toleranzüberschreitungen festgestellt worden sind, aktualisiert wird. Diese Aktualisierung geschieht in der Weise, daß von einer Reihe vorhandener Meßkurven immer diejenige durch die jüngste Meßkurve ersetzt wird, die von dieser jüngsten Meßkurve am meisten abweicht. Die jüngste Meßkurve wird außerdem mit einem Wichtungsfaktor versehen.

## Patentansprüche

1. Verfahren zur Prüfung und Fehleranalyse von elektronischen Schaltungsmoduln, die Bestandteil einer übergeordneten Baugruppe sind, insbesondere der teilnehmerindividuellen Bestandteile von Teilnehmeranschlußbaugruppen eines digitalen Zeitmultiplex-Fernmeldevermittlungssystems, auf Einhaltung geforderter übertragungstechnischer Eigenschaften,

**dadurch gekennzeichnet,**

daß an den Schaltungsmoduln vor ihrer baulichen Vereinigung zu einer größeren Baugruppe je zu überprüfender übertragungstechnischer Eigenschaft eine Meßreihe unter ausschließlicher Verwendung externer bei der Vereinigung mit der übergeordneten Baugruppe ausgenutzter Anschlüsse durchgeführt wird, daß die dabei erhaltenen Meßwerte im Hinblick auf ein Überschreiten, ein Unterschreiten oder ein Einhalten eines zugelassenen Toleranzbereichs digitalisiert werden, und daß zur Fehleranalyse das solcherart aufbereitete Meßergebnis mit in einem Speicher abgelegten definierten Fehlern entsprechenden in derselben Weise digitalisierten Meßwertfolgen verglichen werden.

2. Verfahren nach Anspruch 1,

**dadurch gekennzeichnet,**

daß die digitalisierte Darstellung der aktuell gemessenen und der im Speicher abgelegten Meßwerte jeweils so erfolgt, daß die Meßwerte durch einen ersten, zweiten oder dritten vorgegebenen Zahlenwert ersetzt werden, je nachdem, ob sie die Obergrenze eines Toleranzbereichs überschreiten, innerhalb des Toleranzbereichs liegen oder die Untergrenze des Toleranzbereichs unterschreiten, und daß beim Vergleich der aktuellen Meßwertfolge mit den gespeicherten Meßwertfolgen auf Übereinstimmung geprüft wird.

3. Verfahren nach Anspruch 1,

**dadurch gekennzeichnet,**

daß die digitalisierte Darstellung der aktuell gemessenen und der im Speicher abzulegenden Meßwerte jeweils so erfolgt, daß sie durch einen vorgegebenen Zahlenwert oder durch den Zahlenwert 0 ersetzt werden, je nachdem, ob sie außerhalb oder innerhalb eines Toleranzbereiches liegen, und daß zum Vergleich die gespeicherten, jeweils einem bestimmten Fehler entsprechenden Meßwertfolgen als Matrix aus mehreren Fehlerquellvektoren und die Meßwerte der aktuellen Meßwertfolge als Fehlervektor behandelt werden, ferner eine Multiplikation der Fehlerquellvektorenmatrix und des Fehlervektors vorgenommen wird und schließlich der dabei erhaltene Ergebnisvektor auf Übereinstimmung mit der Summe der Werte des Fehlervektors und der Summe der Werte jedes der Fehlerquellvektoren überprüft wird.

4. Verfahren nach Anspruch 2,
**dadurch gekennzeichnet,**
daß es als Grobanalyse dann angewendet wird, wenn die Toleranzgrenzenüberschreitung bzw. Toleranzgrenzenunterschreitung der aktuellen Meßwerte ein vorgegebenes Ausmaß übersteigt.

5. Verfahren nach Anspruch 3,
**dadurch gekennzeichnet,**
daß es dann angewendet wird, wenn die Grobanalyse nicht zum Auffinden einer Fehlerursache geführt hat oder wenn die Toleranzgrenzenüberschreitung bzw. die Toleranzgrenzenunterschreitung der aktuellen Meßwerte ein vorgegebenes Ausmaß nicht übersteigt.

## Claims

1. A method for testing and fault analysis of electronic circuit modules which are part of a higher-level module, especially the subscriber-individual components of subscriber line modules of a digital time-division multiplex telecommunication switching system, for the maintenance of required transmission characteristics,
**characterised in that**
before the circuit modules are constructionally combined to form a larger module, a series of measurements is carried out for each transmission characteristic to be checked, with the exclusive use of external connections utilised when they are combined with the higher-level module, in that the measurement values obtained during this series are digitised with respect to whether they exceed, drop below or maintain a permitted tolerance range, and in that, for the purpose of fault analysis, the measurement result edited in this manner is compared with measurement value sequences digitised in the same manner, stored in a memory and corresponding to defined faults.

2. Method according to Claim 1,
**characterised in that**
the digitised representation of the currently measured measurement values and of the measurement values stored in the memory is in each case effected in such a manner that the measurement values are replaced by a first, second or third predetermined numerical value depending on whether they exceed the upper limit of a tolerance range, are within the tolerance range or drop below the lower limit of the tolerance range, and in that when the current measurement value sequence is compared with the stored measurement value sequences, their correspondence is checked.

3. Method according to Claim 1,
**characterised in that**
the digitised representation of the mesaurement value currently measured and of the measurement values to be stored in the memory is effected in each case in such a manner that they are replaced by a predetermined numerical value or by the numerical value 0 depending on whether they are outside or within a tolerance range, and in that for the comparison, the stored measurement value sequences in each case corresponding to a particular fault are treated as matrix of several fault source vectors and the measurement value of the current measurement value sequence is treated as fault vector, furthermore the fault source vector matrix and the fault vector are multiplied and, finally, the result vector obtained during this process is checked for correspondence with the sum of the values of the fault vector and the sum of the values of each of the fault source vectors.

4. Method according to Claim 2,
**characterised in that**
it is used as a coarse analysis when the exceeding of the tolerance limit or dropping below the tolerance limit of the current measurement values exceeds a predetermined extent.

5. Method according to Claim 3,
**characterised in that**
it is used when the coarse analysis has not led to a fault cause being found or when the exceeding of the tolerance limit or the dropping below the tolerance limit of the current measurement values does not exceed a predetermined extent.

## EP 0 327 872 B1

**Revendications**

1. Procédé pour le contrôle et l'analyse d'erreurs d'unités de circuits électroniques, qui font partie d'un module de rang supérieur, notamment des composants, prévus pour chaque abonné, de modules de raccordement d'abonnés à système de commutation numérique de télécommunications d'un multiplexage temporel, de manière à respecter des propriétés techniques de transmission requises,
**caaractérisé par le**
fait qu'une série de mesures est exécutée sur les unités de circuit avant leur réunion, du point de vue construction, pour former un module plus important, en ce qui concerne chaque propriété technique de transmission devant être contrôlée, moyennant l'utilisation exclusive de bornes extérieures utilisées lors de la réunion au module de rang supérieur, qu'on numérise les valeurs de mesure alors obtenues en rapport avec un dépassement par valeurs supérieures, un dépassement par valeurs inférieures ou le maintien d'une plage autorisée de tolérances, et que pour l'analyse d'erreurs, on compare le résultat de mesure préparé de cette manière, à des séquences de valeurs de mesure numérisées de la même manière et qui correspondent à des erreurs définies insérées dans une mémoire.

2. Procédé suivant la revendication 1,
**caractérisé par le**
fait que la représentation numérisée des valeurs de mesure mesurées effectivement et des valeurs de mesure insérées dans une mémoire sont exécutées respectivement de telle sorte que les valeurs de mesure sont remplacées par une première, une seconde ou une troisième valeur de comptage prédéterminée, selon qu'elles dépassent la limite supérieure d'une plage de tolérances, qu'elles se situent à l'intérieur de cette plage de tolérances ou qu'elles tombent au-dessous de la limite inférieure de la plage de tolérances et qu'un contrôle de coïncidence est exécuté lors de la comparaison de la suite réelle des valeurs de mesure aux suites mémorisées de valeurs de mesure.

3. Procédé suivant la revendication 1,
**caractérisé par le**
fait que la représentation numérisée des valeurs de mesure réellement mesurées et des valeurs de mesure introduites en mémoire est exécutée de telle sorte qu'elles sont remplacées par une valeur chiffrée prédéterminée ou par la valeur chiffrée 0 selon qu'elles sont situées à l'extérieur ou à l'intérieur de la plage de tolérances, et que pour la comparaison, les suites mémorisées de valeurs de mesure, qui correspondent respectivement à une erreur déterminée, sont traitées sous la forme d'une matrice de plusieurs vecteurs de sources d'erreurs et que les valeurs de mesure de la suite réelle de valeurs de mesure est traitée sous la forme d'un vecteur d'erreurs, qu'en outre on procède à une multiplication de la matrice des vecteurs de sources d'erreurs et du vecteur d'erreurs et qu'on exécute un contrôle du vecteur résultat obtenu pour voir s'il coïncide avec la somme des valeurs du vecteur d'erreurs et avec la somme des valeurs de chacun des vecteurs des sources d'erreurs.

4. Procédé suivant la revendication 2,
**caractérisé par le**
fait qu'on l'utilise, en tant qu'analyse grossière, lorsque le dépassement des limites de tolérances par valeurs supérieures ou par valeurs inférieures, des valeurs réelles de mesure, dépasse une valeur prédéterminée.

5. Procédé suivant la revendication 3,
**caractérisé par le**
fait qu'on l'utilise lorsque l'analyse grossière n'a pas conduit à la détection d'une cause d'erreur ou lorsque le dépassement de limites de tolérances par valeurs supérieures ou par valeurs inférieures des valeurs réelles de mesure, ne dépasse pas une valeur prédéterminée.

# FIG 1

# FIG 2

Meßwerte

Meßwerte mit
Toleranzverletzung

Fehlerklasse

geringe
Toleranzüberschreitung

grobe Toleranzüberschreitung

Fehlervektor

Fehlervektor

Feinanalyse

Grobanalyse

nicht erfolgreich

erfolg=
reich

Protokolldaten

Protokoll